Europäisches Patentamt

European Patent Office

Office européen des brevets

(11) Veröffentlichungsnummer: **0 333 654**
**A1**

## (12) EUROPÄISCHE PATENTANMELDUNG

(21) Anmeldenummer: 89810174.6

(22) Anmeldetag: 07.03.89

(51) Int. Cl.⁴: **G 01 B 21/22**
**B 21 D 5/02**

(30) Priorität: 15.03.88 AT 697/88

(43) Veröffentlichungstag der Anmeldung:
20.09.89 Patentblatt 89/38

(84) Benannte Vertragsstaaten:
BE CH DE ES FR GB GR IT LI LU NL SE

(71) Anmelder: Hämmerle AG
Wuhrmattstrasse 1
CH-4800 Zofingen (CH)

(72) Erfinder: Zbornik, Vaclav
Titlisstrasse 4
CH-4665 Oftringen (CH)

(74) Vertreter: Rottmann, Maximilian R.
c/o Rottmann, Zimmermann + Partner AG Glattalstrasse 37
CH-8052 Zürich (CH)

(54) Winkelmessgerät.

(57) Das Winkelmessgerät ermöglicht die kontinuierliche Messung des Biegewinkels eines zu verformenden Blechstücks (4) während des Pressvorgangs. Das Winkelmessgerät weist ein gegen das Blechstück (4) anlegbare Auflageelement (13) sowie einen von der ersten Anlegestelle entfernt liegenden Stelle gegen das Blechstück anlegbaren Tastkopf (21) auf, wobei die Verbindung der Berührungsstellen des Auflageelements (13) und des Tastkopfes (21) mit dem Blechstück (4) der momentanen Winkellage des Blechstücks entspricht. Zum Erfassen der Schwenkbewegung des Tastkopfes ist ein Winkelmessorgan (15) vorhanden. Das Winkelmessorgan ist durch eine Parallelogrammverbindung (18, 22) mit dem beweglichen Tastkopf (21) gekoppelt.

FIG.1

EP 0 333 654 A1

**Beschreibung**

## Winkelmessgerät

Die vorliegende Erfindung bezieht sich auf ein Winkelmessgerät zur kontinuierlichen Messung des Biegewinkels eines auf einer Matrize aufliegenden und mittels eines Stempels zu verformenden Werkstückes während des Pressvorgangs mit Hilfe einer Parallelogrammverbindung und eines Winkelmessorganes.

Beim Blechbiegen mit einem Biegestempel und einer Matrize ist die exakte Bestimmung des Biegewinkels äusserst wichtig. Dieser Biegewinkel steht in direktem Zusammenhang mit der Eindringtiefe des Biegestempels in die Matrize, welche Eindringtiefe durch Hubbegrenzung des Biegestempels bzw. durch die Anordnung eines verstellbaren Matrizenbodens verhältnismässig exakt bestimmt werden kann. Die Erfahrung hat aber gezeigt, dass bei gleicher Eindringtiefe der Biegewinkel je nach Qualität und Stärke des zu biegenden Blechstücks kleinere oder grössere Abweichungen vom Sollwert aufweist. Diese Abweichungen beinträchtigen erheblich die Präzision der Blechbearbeitung und können oft zu Ausschussware führen.

Man hat deshalb versucht, den Biegewinkel beim Blechbiegen mit einem Biegestempel zu korrigieren und es ist ein Verfahren bekannt, bei welchem der eine Schenkel des gebogenen Winkels auf einem ebenen Blech festgehalten und die Lage des abstehenden Schenkels bezüglich einer vertikalen Bezugsebene gemessen wird. Aus den ermittelten Werten wird die effektive Winkellage der beiden Schenkel bestimmt und mit einem in einem Programmträger gespeicherten Sollwert verglichen. Anschliessend wird die Eindringtiefe des Biegestempels in Funktion der ermittelten Abweichung vom Sollwert geändert. Dieses Verfahren hat sich zwar sehr gut bewährt, ist aber etwas umständlich und kann nicht zum direkten Messen des Blechwinkels während der Bearbeitung herangezogen werden.

Bei einem anderen, ebenfalls bekannten Verfahren wird die während der Deformation eines Bleches auftretende Biegekraft in einem Probelauf nach Grösse und Verlauf in Funktion der Eindringtiefe gemessen und registriert. Beim Biegen eines weiteren Bleches wird der Kräfteverlauf mit dem gespeicherten Kräfteverlauf verglichen und bei vorhandenen Unterschieden die Eindringtiefe korrigiert. Auch dieses Verfahren ist präzis, besteht aber aus mehreren Arbeitsgängen, so dass es nur bei allerhöchsten Anforderungen an die Präzision der gebogenen Blechstücke wirtschaftlich vertretbar angewendet werden kann.

Zweck der Erfindung ist es, ein einfaches, zuverlässiges und sehr präzis arbeitendes Winkelmessgerät vorzuschlagen, mittels welchem der Blechwinkel kontinuierlich und sehr genau ermittelt werden kann.

Das Winkelmessgerät gemäss der Erfindung weist die im Anspruch 1 aufgeführten Merkmale auf.

Eine vorgeschlagene bevorzugte Ausführungsform des Winkelmessgerätes ist im Anspruch 2 definiert.

Das dem Tastkopf abgekehrte Ende des Trägers ist mit einem, pneumatisch, hydraulisch, oder federnd verschiebbaren Organ gelenkig verbunden.

Auf beiliegender Zeichnung ist ein Ausführungsbeispiel des Erfindungsgegenstandes dargestellt, und zwar zeigen:

Fig. 1 einen Schnitt durch eine erste Ausführung eines Winkelmessgeräts gemäss der Erfindung;

Fig. 2 einen Querschnitt gemäss der Linie A - A in der Fig. 1; und die

Fig. 3 + 4 je eine Einzelheit einer Variante in schematischer Darstellung.

Das vorgeschlagene Winkelmessgerät dient zur kontinuierlichen Messung des Biegewinkels beim Blechbiegen mit einem Biegestempel und einer Matrize, welche das zu verformende Werkstück, nämlich das zu biegende Blech trägt. Während des Biegevorgangs dringt der Biegestempel je nach Biegewinkel mehr oder weniger in die Matrize ein. Beim Biegen bilden sich zwei Blechschenkel, die während des Biegevorgangs so gegeneinander schwenken, dass der durch die beiden Schenkel eingeschlossene Winkel immer kleiner wird.

Das vorgeschlagene Winkelmessgerät dient zur kontinuierlichen Ermittlung der Schwenklage des einen Schenkels, woraus der durch die beiden Schenkel eingeschlossene Winkel bestimmt werden kann. Gegebenenfalls können auch zwei Winkelmessgeräte verwendet werden, welche, auf der rechten bzw. linken Seite der Matrize angeordnet, die Stellung des zugehörigen Schenkels während des Biegevorgangs ermitteln.

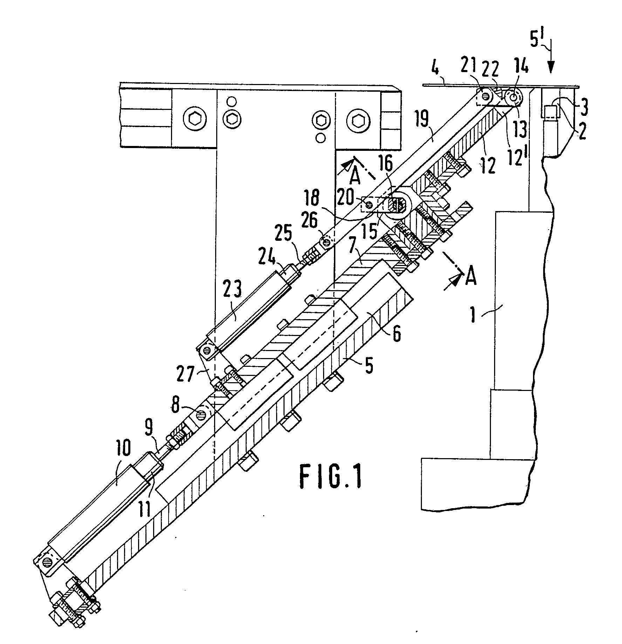

Zur näheren Erklärung des Aufbaus des Winkelmessgeräts wird auf Fig. 1 verwiesen. In dieser Figur ist mit 1 ein Ständer einer Biegeeinrichtung bezeichnet, welcher mit einer Biegematrize 2 ausgerüstet ist. Zweckmässigerweise kann die Matrize 2 mit einem verstellbaren Boden 3 versehen sein, welcher in bekannter Weise zur Bestimmung des definitiven Biegewinkels dient. Bei einer gegebenen Matrizenbreite wird durch die Stellung des verstellbaren Bodens 3 der Winkel theoretisch bestimmt, welchen die beiden Schenkel eines zu bearbeitenden Blechstücks einschliessen werden. Dieser theoretische Winkel stimmt aber mit dem tatsächlichen Winkel nicht überein, da die Beschaffenheit des Blechstücks, die Dicke desselben, sowie äussere Einflüsse kleinere oder grössere Abweichungen vom theoretischen Winkelwert verursachen. Beim Präzisionsblechbiegen ist es deshalb un erlässlich, den Biegewinkel kontinuierlich während des Pressvorgangs zu messen.

Das auf der Matrize 2 aufliegende Blechstück ist mit 4 bezeichnet und der mit der Matrize zusammenarbeitende Blechstempel wird durch einen Pfeil 5' angedeutet.

Auf der einen Seite der Matrize ist ein Führungsarm 5 vorhanden, welcher unterhalb der Matrize schräg gegen die Matrize gerichtet angeordnet ist. Der Führungsarm 5 ist mit einer Führungsschiene 6 ausgerüstet, auf welcher ein Schlitten 7 entlang des Führungsarms 5 innert vorbestimmter Grenzen verschiebbar ist. Der Schlitten 7 erstreckt sich in der Längsrichtung parallel zum Führungsarm 5 und ist gelenkig bei 8 mit der Kolbenstange 9 eines Betätigungsorgans 10 verbunden, welches einen hydraulischen oder pneumatischen Zylinder mit Kolben 11 besitzt.

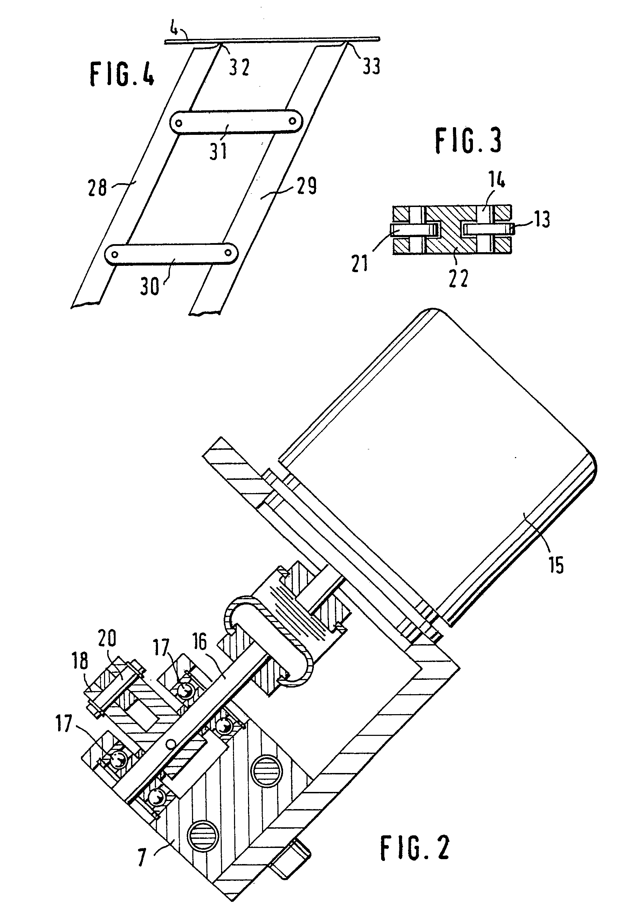

Am anderen, der Gelenkverbindung abgekehrten Ende des Schlittens 7 ist ein Halter 12 befestigt, welcher sich mit seinem gegabelten Ende bis zum Blechstück 4 erstreckt und in der Gabelung mit einem Taster 22 verbunden ist, welcher aus der Fig. 3 ersichtlich ist. Der Taster 22 ist H-förmig ausgebildet und einerends mit einem Auflageelement 13 versehen, welches drehbar um eine Achse 14 in die Gabelung 12' des Halters 12 eingesetzt ist. In die andere Ausnehmung des Tasters 22 ist ein Tastknopf 21 in der Form eine Rolle drehbar eingesetzt. Das andere Ende des Halters 12 ist im Bereich der Verbindung mit dem Schlitten 7 mit einem Winkelmessorgan ausgerüstet, welches einen elektrischen Winkelschrittgeber 15 besitzt. Dieser ist mit einer sich aus dem Gehäuse des Winkelschrittgebers 15 erstreckenden Welle 16 versehen, die bei ihrer Drehung, dem zurückgelegten Winkel entsprechend, Impulse erzeugt. Das freie Ende der Welle 16 wird in Kugellagern 17, die am Schlitten 7 angeordnet sind, gehalten (Fig. 2). Zwischen den beiden Kugellagern 17 ist ein gegabelter Gelenkarm 18 drehfest mit der Welle 16 verbunden. Das andere Ende des Gelenkarms 18 ist mit einem Träger 19 um eine Achse 20 schwenkbar gekoppelt. Dieser Träger 19 erstreckt sich parallel zum Halter 12 und ist an seinem dem Blechstück 4 zugekehrten Ende mit dem Ende des Tasters 22 mit Tastkopf 21 verbunden, welcher somit an einer von der Anlegestelle des Auflageelements 13 örtlich etwas entfernt liegenden Stelle gegen das zu messende Blechstück 4 anlegbar ist. Die Verbindung der Berührungsstellen des Auflageelements 13 und des Tastkopfes 21 mit dem Blechstück 4 entspricht der momentanen Winkellage desselben.

Da das nach oben gerichtete Ende des Trägers 19 mit dem zugekehrten Ende des Tasters 22 verbunden ist, bildet der Halter 12 und der Träger 19 zusammen mit dem Gelenkarm 18 und Taster 22 ein Gelenkparallelogramm. Im beiderends gegabelten Taster 22 findet also sowohl der Tastkopf 21 als auch das Auflageelement 13 Aufnahme.

In der beschriebenen Weise ist das örtlich getrennt vom Auflageelement 13 und Tastkopf 21 angeordnete Winkelmessorgan, in der Form des Winkelschrittgebers 15, durch die Parallelogrammverbindung mit dem Tastkopf 21 gekoppelt. Dies bedeutet, dass die während des Biegevorgangs auftretende Schwenkbewegung des (in der Zeichnung linken) Schenkels des Blechstücks 4 mit dem Auflageelement 13 bzw. mit dem Tastkopf 21 verfolgt wird, wobei der Träger 19, bei einer Schwenkung des Gelenkarms 18 und des Tasters 22 im Uhrzeigersinn, eine Schwenkung der Welle 16 des Winkelschrittgebers 15 verursacht, wodurch entsprechende Impulse ausgelöst werden, welche die Winkelstellung anzeigen.

Damit eine konstante Berührung des Tastkopfs 21 und des Auflageelements 13 mit dem Blechstück 4 während des ganzen Biegevorgangs gesichert wird, steht der Träger 19 unter einem konstanten Druck, welcher z.B. durch ein Verschiebeorgan 23 erzeugt wird. Dieses pneumatisch oder hydraulisch betätigbare Verschiebeorgan weist einen Zylinder und in diesem einen Kolben 24 auf, welcher durch eine Kolbenstange 25 mit dem gegabelten Ende des Trägers 19 mit Hilfe eines Gelenkbolzens 26 schwenkbar verbunden ist. Das Verschiebeorgan 23 ist andernends am Schlitten 7 mit Hilfe einer Stütze 27 ebenfalls schwenkbar befestigt.

Zur Betätigung des Winkelmessgeräts wird der Schlitten 7 mit Hilfe des Betätigungsorgans 10 soweit verschoben, bis das Auflageelement 13 und der Tastkopf 21 sich gegen das zu bearbeitende Blechstück 4 aufliegen. Dieses nimmt zunächst die dargestellte horizontale Lage ein. Gleichzeitig wird im Zylinder des Verschieborgans 23 soviel Druck erzeugt, dass der Tastkopf 21 die untere Seite des Blechstücks 4 gerade berührt. Wird nun der Stempel 5' langsam gesenkt. so werden die gebildeten Blechschenkel rechts und links vm Stempel 5' im Uhrzeigersinn bzw. Gegenuhrzeigersinn geschwenkt. Da der Tastkopf 21 mit konstantem Druck gegen den entsprechenden Blechschenkel gepresst wird, folgt der Träger 19 der Schwenkbewegung des Blechschenkels, wobei der Gelenkarm 18 und der Taster 22 eine koordinierte Drehung im Uhrzeigersinn ausführen. Durch die Drehung des Gelenkarms 18 wird die mit dem Gelenkarm drehfest verbundene Welle 16 ebenfalls verdreht, wodurch der Winkelschrittgeber 15 eine Anzahl Impulse erzeugt, welche dem zurückgelegten Winkel entsprechen. Falls nach Beendigung des Pressvorgangs die Blechschenkel etwas zurückfedern, so wird auch diese Bewegung vom Tastkopf 21 erfasst und durch die Parallelogrammverbindung dem Winkelschrittgeber 15 weitergegeben. Auch in diesem Fall zeigt der Winkelschrittgeber 15 den tatsächlichen Winkel an.

Eine etwas geänderte Ausführungsform des beschriebenen Winkelmessgeräts ist aus Fig. 4 ersichtlich. Diese Ausführung eignet sich für sehr kurze Blechschenkel und besteht aus zwei zueinander parallel verlaufenden Trägern 28 und 29, welche anstelle des Trägers 19 und des Halters 12 verwendet werden. Die beiden Träger 28 und 29 sind durch Verbindungsgelenke 30, 31 zu einem Parallelogramm verbunden, wobei anstelle des Tastkopfs 21 und des Auflageelements 13 gehärtete Spitzen 32, 33 vorgesehen und am Ende der Träger 28, 29 ausgebildet sind. Sowohl der Träger 28 als auch der Träger 29 sind, wie beschrieben, an einem ge meinsamen Schlitten befestigt und die Anordnung des Winkelschrittgebers 15 entspricht der beschriebenen Ausführung.

Diese zuletzt erläuterte Ausführung kann auch für sehr schmale Blechstücke verwendet werden, in dem die gehärteten Spitzen 32, 33 örtlich unmittelbar an die Matrize 2 anschliessend verwendbar sind oder sogar durch einen entsprechenden Schlitz der Matrize geführt werden können.

Das beschriebene Winkelmessgerät eignet sich hervorragend zur kontinuierlichen Messung des Biegewinkels eines zu verformenden Werkstücks während des Pressvorgangs und es ist auch möglich, beidseitig der Matrize je ein Winkelmessgerät anzuordnen, diese separat zu betreiben und die ermittelten Werte gemeinsam durch einen Rechner auszuwerten.

Schliesslich sei noch erwähnt, dass es möglich ist, gemäss einer besonders einfachen Ausführung, die Betätigung des Trägers 19 gemäss der ersten Ausführung bzw. des Trägers 29 gemäss der zweiten Ausführung mit Hilfe einer einfachen Feder zu bewerkstelligen, deren Federkraft so bemessen ist, dass der erwähnte Träger sanft aber konstant gegen das Blechstück gepresst wird und der Schwenkbewegung desselben kontinuierlich folgt. Schliesslich ist auch eine Kombination von Luftzylindern mit Druckfedern möglich.

Das beschriebene Winkelmessgerät ist sehr einfach aufgebaut, arbeitet absolut zuverlässig und erfüllt selbst die höchsten Anforderungen bezüglich Präzision.

## Patentansprüche

1. Winkelmessgerät zur kontinuierlichen Messung des Biegewinkels eines auf einer Matrize (2) aufliegenden und mittels eines Stempels (5') zu verformenden Werkstückes (4) während des Pressvorganges, mit Hilfe einer Parallelogrammverbindung und eines Winkelmessorganes,
**dadurch gekennzeichnet,**
dass die Parallelogrammverbindung ein gegen das zu messende Werkstück (4) an einer ersten Stelle anlegbares Auflageelement (13), sowie einen von der ersten Anlegestelle entfernt liegenden Stelle gegen das zu messesnde Blechstück anlegbaren Tastkopf (21) aufweist, wobei das Auflageelement (13) gegenüber dem Werkstück in schrägem Winkel verschiebbar angeordnet, während der Tastkopf (21) verschiebbar und schwenkbar gelagert ist und mit dem Winkelmessorgan (15) in Verbindung steht.

2. Winkelmessgerät nach Anspruch 1,
**dadurch gekennzeichnet,**
dass zur Aufnahme des als Rollkörper ausgebildeten Auflageelementes (13) ein schräg gegen das in der Ausgangsstellung horizontal verlaufende Werkstück (4) gerichteter und verschiebbarer Halter (12) vorhanden ist, welcher an seinem dem Auflageelement (13) entgegengesetzten Ende mit dem Winkelmessorgan (15) ver bunden ist, während der Tastkopf (21), welcher ebenfalls als Rolle ausgebildet ist, an einem parallel zum Halter (12) angeordneten Träger (19) befestigt und durch eine erste Gelenkverbindung (22) mit der Achse (14) des Auflageelementes (13) in schwenkbarer Verbindung steht, wobei ein zur ersten Gelenkverbindung (22) parallel verlaufendes zweites Gelenk (18) die Achse (16) des Winkelmessorganes (15) mit dem Träger (19) verbindet.

3. Winkelmessgerät nach Ansprüchen 1 und 2

**dadurch gekennzeichnet,**
dass der Träger (19) an seinem dem Tastkopf (21) abgekehrten Ende mit einem Verschiebeorgan (23) gelenkig verbunden ist.

4. Winkelmessgerät nach Ansprüchen 1 bis 3,
**dadurch gekennzeichnet,**
dass der Halter (12) und der mit dem Halter (12) durch eine Parallelogrammverbindung gekoppelte Träger (19) an einem Schlitten (7) angeordnet sind, der an einem ortsfesten Führungsarm (5) verschiebbar Aufnahme findet.

5. Winkelmessgerät nach Ansprüchen 1 bis 4,
**dadurch gekennzeichnet,**
dass der Schlitten (7) unter dem Einfluss eines Betätigungsorganes (10) steht.

6. Winkelmessgerät nach Anspruch 1,
**dadurch gekennzeichnet,**
dass Auflageelement und Tastkopf als gehärtete Spitzen (32, 33) von parallelen Trägern (28, 29) ausgebildet sind, die durch Verbindungsgelenke (30, 31) miteinander gekoppelt sind.

FIG.1

FIG.4

32

33

31

28

29

30

4

FIG.3

14

13

21

22

15

FIG.2

20

17

16

18

17

7

| EINSCHLÄGIGE DOKUMENTE | | EP 89810174.6 |
|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE - B - 2 044 199 (MENGELE) * Gesamt * ____ | 1,2 | G 01 B 21/22 B 21 D 5/02 |
| | | | **RECHERCHIERTE SACHGEBIETE (Int Cl.4)** |
| | | | G 01 B 5/00 G 01 B 21/00 B 21 D 5/00 |

Der vorliegende Recherchenbericht wurde für alle Patentansprüche erstellt

| Recherchenort | Abschlußdatum der Recherche | Prüfer |
|---|---|---|
| WIEN | 23-06-1989 | TOMASELLI |